# EUROPEAN PATENT APPLICATION

(11) **EP 4 410 925 A1**
(43) Date of publication of application: **07.08.2024**
(21) Application number: 22875583.1
(22) Date of filing: 29.07.2022
(51) Int. Cl.: C09K 5/04, F25B 1/00

(54) **REFRIGERANT-CONTAINING COMPOSITION, USE OF SAME, REFRIGERATOR COMPRISING SAME, AND METHOD FOR OPERATING REFRIGERATOR**

(30) Priority: 30.09.2021 JP 2021161922
(71) Applicant: Daikin Industries, Ltd., Osaka-shi, Osaka 530-8323 (JP)
(72) Inventor: ITANO, Mitsushi, Osaka-shi, Osaka 530-0001 (JP); TOKUNO, Satoshi, Osaka-shi, Osaka 530-0001 (JP); GOTOU, Tomoyuki, Osaka-shi, Osaka 530-0001 (JP); YOSHIMURA, Takashi, Osaka-shi, Osaka 530-0001 (JP); USUI, Takashi, Osaka-shi, Osaka 530-0001 (JP); NAKAUE, Tsubasa, Osaka-shi, Osaka 530-0001 (JP)
(74) Representative: Hoffmann Eitle
(86) International application number: PCT/JP2022/029366
(87) International publication number: WO 2023/053706

(57) **Abstract**

An object is to suppress disproportionation in a refrigerant comprising HFO-1132(E) when the refrigerant has a pressure of 3.0 MPa. A composition comprising a refrigerant, the refrigerant comprising trans-1,2-difluoroethylene (HFO-1132(E)), trifluoroethylene (HFO-1123), and tetrafluoropropene in a total amount of 99.5 mass% or more based on the entire refrigerant, wherein when the mass% of HFO-1132(E), HFO-1123, and tetrafluoropropene based on their sum is respectively represented by x, y, and z, coordinates (x,y,z) in a ternary composition diagram in which the sum of HFO-1132(E), HFO-1123, and tetrafluoropropene is 100 mass% are within the range of a figure surrounded by straight lines AB, BO, and OA that connect the following 3 points:
point A (44.0, 0.0, 56.0),
point B (0.0, 56.0, 44.0), and
point O (0.0, 0.0, 100.0),
or on the above straight line AB (excluding the points A and B).

## Description

### Technical Field

The present disclosure relates to a composition comprising a refrigerant, use of the composition, a refrigerating machine having the composition, and a method for operating the refrigerating machine.

### Background Art

A working medium comprising 1,2-difluoroethylene (HFO-1132) has been proposed (PTL 1).

### Citation List

### Patent Literature

PTL 1: WO2012/157765

### Summary of Invention

### Technical Problem

An object of the present disclosure is to suppress disproportionation in a refrigerant comprising HFO-1132(E) when the refrigerant has a pressure of 3.0 MPa or less and a temperature of 150°C or less.

### Solution to Problem

### Item 1.

A composition comprising a refrigerant,
the refrigerant comprising trans-1,2-difluoroethylene (HFO-1132(E)), trifluoroethylene (HFO-1123), and tetrafluoropropene in a total amount of 99.5 mass% or more based on the entire refrigerant,
wherein
when the mass% of HFO-1132(E), HFO-1123, and tetrafluoropropene based on their sum is respectively represented by x, y, and z, coordinates (x,y,z) in a ternary composition diagram in which the sum of HFO-1132(E), HFO-1123, and tetrafluoropropene is 100 mass% are within the range of a figure surrounded by straight lines AB, BO, and OA that connect the following 3 points:
point A (44.0, 0.0, 56.0),
point B (0.0, 56.0, 44.0), and
point O (0.0, 0.0, 100.0),
or on the above straight line AB (excluding the points A and B).

### Item 2.

A method for suppressing the disproportionation reaction of HFO-1132(E), comprising operating a refrigeration cycle using a composition comprising a refrigerant,
the refrigerant comprising HFO-1132(E), HFO-1123, and 2,3,3,3-tetrafluoropropene (R1234yf) in a total amount of 99.5 mass% or more based on the entire refrigerant,
wherein
when the mass% of HFO-1132(E), HFO-1123, and R1234yf based on their sum is respectively represented by x, y, and z, coordinates (x,y,z) in a ternary composition diagram in which the sum of HFO-1132(E), HFO-1123, and R1234yf is 100 mass% are within the range of a figure surrounded by straight lines AB, BD, DC, and CA that connect the following 4 points:
point A (44.0, 0.0, 56.0),
point B (0.0, 56.0, 44.0),
point D (0.0, 9.8, 90.2), and
point C (12.2, 0.0, 87.8),
or on the above straight lines AB and DC (excluding the points A, B, D, and C).

### Item 3.

A composition comprising a refrigerant,
the refrigerant comprising HFO-1132(E), HFO-1123, and R1234yf in a total amount of 99.5 mass% or more based on the entire refrigerant,
wherein
when the mass% of HFO-1132(E), HFO-1123, and R1234yf based on their sum is respectively represented by x, y, and z, coordinates (x,y,z) in a ternary composition diagram in which the sum of HFO-1132(E), HFO-1123, and R1234yf is 100 mass% are within the range of a figure surrounded by straight lines GG', G'H, HE, EC, CD, and DG that connect the following 6 points:
point G (0.0, 26.4, 73.6),
point G' (7.5, 19.4, 73.1),
point H (14.9, 12.7, 72.4),
point E (13.6, 0.0, 86.4),
point C (12.2, 0.0, 87.8), and
point D (0.0, 9.8, 90.2),
or on the above straight lines GG', G'H, HE, and CD (excluding the points G, E, C, and D).

### Item 4.

A composition comprising a refrigerant,
the refrigerant comprising HFO-1132(E), HFO-1123, and R1234yf in a total amount of 99.5 mass% or more based on the entire refrigerant,
wherein
when the mass% of HFO-1132(E), HFO-1123, and R1234yf based on their sum is respectively represented by x, y, and z, coordinates (x,y,z) in a ternary composition diagram in which the sum of HFO-1132(E), HFO-1123, and R1234yf is 100 mass% are within the range of a figure surrounded by straight lines GG', G'H', H'K', K'D, and DG that connect the following 5 points:
point G (0.0, 26.4, 73.6),
point G' (7.5, 19.4, 73.1),
point H' (12.3, 14.5, 73.2),
point K' (10.9, 10.4, 78.7), and
point D (0.0, 9.8, 90.2),
or on the above straight lines GG', G'H', H'K', and K'D (excluding the points G and D).

### Item 5.

The composition according to Item 4, wherein in the refrigerant, coordinates (x,y,z) are within the range of a figure surrounded by straight lines DI', I'J', J'K', and K'D that connect the following 4 points:
point D (0.0, 9.8, 90.2),
point I' (6.1, 12.7, 81.2),
point J' (12.2, 13.8, 74.0), and
point K' (10.9, 10.4, 78.7),
or on the above straight lines DI', I'J', J'K', and K'D (excluding the points G and D).

### Item 6.

A method for suppressing the disproportionation reaction of HFO-1132(E), comprising operating a refrigeration cycle using a composition comprising a refrigerant,
the refrigerant comprising HFO-1132(E), HFO-1123, and tetrafluoropropene in a total amount of 99.5 mass% or more based on the entire refrigerant,
tetrafluoropropene comprising 1,3,3,3-tetrafluoropropene (R1234ze) and R1234yf,
wherein
when the mass% of HFO-1132(E) is x, the mass% of HFO-1123 is y, the total mass% of R1234ze and R1234yf is z, and the mass ratio of R1234yf to the sum of R1234ze and R1234yf is r, coordinates (x,y,z) in a ternary composition diagram in which the sum of HFO-1132(E), HFO-1123, R1234ze, and R1234yf is 100 mass% are within the range of a figure surrounded by straight lines AᵣBᵣ, BᵣDᵣ, DᵣCᵣ, and CᵣAᵣ that connect the following 4 points:
point Aᵣ (44.0, 0.0, 56.0),
point Bᵣ (0.0, 56.0, 44.0),
point Dᵣ (0.0, 0.6r²-7.7r+16.9, -0.6r²+7.7r+83.1), and
point Cᵣ (r²-11.5r+22.7, 0.0, -r²+11.5r+77.3),
or on the above straight lines AᵣBᵣ and DᵣCᵣ (excluding the points Aᵣ, Bᵣ, Dᵣ, and Cᵣ).

### Item 7.

A composition comprising a refrigerant,
the refrigerant comprising HFO-1132(E), HFO-1123, and tetrafluoropropene in a total amount of 99.5 mass% or more based on the entire refrigerant,
wherein
when the mass% of HFO-1132(E) is x, the mass% of HFO-1123 is y, the total mass% of R1234ze and R1234yf is z, and the mass ratio of R1234yf to the sum of R1234ze and R1234yf is r,
if 0≤r<0.5,
coordinates (x,y,z) in a ternary composition diagram in which the sum of HFO-1132(E), HFO-1123, R1234ze, and R1234yf is 100 mass% are within the range of a figure surrounded by straight lines LᵣDᵣ, DᵣGᵣ, GᵣG'ᵣ, G'ᵣHᵣ, and HᵣLᵣ that connect the following 5 points:
   point Lᵣ (-6.2r+20.3, -3.6r+1.8, 9.8r+77.9),
   point Dᵣ (0.0, 0.6r²-7.7r+16.9, -0.6r²+7.7r+83.1),
   point Gᵣ (0.0, 1.4r²-15.5r+31.4, -1.4r²+15.5r+68.6),
   point G'ᵣ (10.0, 1.2r²-14.8r+21.7, -1.2r²+14.8r+68.3), and
   point Hᵣ (-1.4r²-5.1r+20.5, 3.8r²-11.5r+12.3, -2.4r²+16.6r+67.2),
   or on the above straight lines LᵣDᵣ, GᵣG'ᵣ, G'ᵣHᵣ, and HᵣLᵣ (excluding the points Dᵣ and Gᵣ); or
   if 0.5≤r<1,
   coordinates (x,y,z) are within the range of a figure surrounded by straight lines CᵣDᵣ, DᵣGᵣ, GᵣG'ᵣ, G'ᵣHᵣ, and HᵣCᵣ that connect the following 5 points:
      point Cᵣ (r²-11.5r+22.7, 0.0, -r²+11.5r+77.3),
      point Dᵣ (0.0, 0.6r²-7.7r+16.9, -0.6r²+7.7r+83.1),
      point Gᵣ (0.0, 1.4r²-15.5r+31.4, -1.4r²+15.5r+68.6),
      point G'ᵣ (10.0, 1.2r²-14.8r+21.7, -1.2r²+14.8r+68.3), and
      point Hᵣ (-1.4r²-5.1r+20.5, 3.8r²-11.5r+12.3, -2.4r²+16.6r+67.2),
      or on the above straight lines CᵣDᵣ, GᵣG'ᵣ, G'ᵣHᵣ, and HᵣCᵣ (excluding the points Cᵣ, Dᵣ, and Gᵣ).

### Item 8.

Use of the composition according to any one of Items 1, 3 to 5, and 7, for suppressing the disproportionation reaction of HFO-1132 (E) .

### Item 9.

The composition according to any one of Items 1, 3 to 5, and 7, for use as a working fluid for a refrigerating machine, wherein the composition further comprises a refrigeration oil.

### Item 10.

The composition according to any one of Items 1, 3 to 5, and 7, for use as an alternative refrigerant for R32 and/or R410A.

### Item 11.

Use of the composition according to any one of Items 1, 3 to 5, and 7 as an alternative refrigerant for R32 and/or R410A.

### Item 12.

Use of a composition comprising a refrigerant as an alternative refrigerant for R32 and/or R410A,
the refrigerant comprising HFO-1132(E), HFO-1123, and 2,3,3,3-tetrafluoropropene (R1234yf) in a total amount of 99.5 mass% or more based on the entire refrigerant,
wherein
when the mass% of HFO-1132(E), HFO-1123, and R1234yf based on their sum is respectively represented by x, y, and z, coordinates (x,y,z) in a ternary composition diagram in which the sum of HFO-1132(E), HFO-1123, and R1234yf is 100 mass% are within the range of a figure surrounded by straight lines AB, BD, DC, and CA that connect the following 4 points:
point A (44.0, 0.0, 56.0),
point B (0.0, 56.0, 44.0),
point D (0.0, 9.8, 90.2), and
point C (12.2, 0.0, 87.8),
or on the above straight lines AB and DC (excluding the points A, B, D, and C).

### Item 13.

Use of a composition comprising a refrigerant as an alternative refrigerant for R32 and/or R410A,
the refrigerant comprising HFO-1132(E), HFO-1123, and tetrafluoropropene in a total amount of 99.5 mass% or more based on the entire refrigerant,
tetrafluoropropene comprising R1234ze and R1234yf, wherein
when the mass% of HFO-1132(E) is x, the mass% of HFO-1123 is y, the total mass% of R1234ze and R1234yf is z, and the mass ratio of R1234yf to the sum of R1234ze and R1234yf is r, coordinates (x,y,z) in a ternary composition diagram in which the sum of HFO-1132(E), HFO-1123, R1234ze, and R1234yf is 100 mass% are within the range of a figure surrounded by straight lines AᵣBᵣ, BᵣDᵣ, DᵣCᵣ, and CᵣAᵣ that connect the following 4 points:
point Aᵣ (44.0, 0.0, 56.0),
point Bᵣ (0.0, 56.0, 44.0),
point Dᵣ (0.0, 0.6r²-7.7r+16.9, -0.6r²+7.7r+83.1), and
point Cᵣ (r²-11.5r+22.7, 0.0, -r²+11.5r+77.3),
or on the above straight lines AᵣBᵣ and DᵣCᵣ (excluding the points Aᵣ, Bᵣ, Dᵣ, and Cᵣ).

### Item 14.

A refrigerating machine comprising the composition according to any one of Items 1, 3 to 5, and 7 as a working fluid.

### Item 15.

A method for operating a refrigerating machine, comprising circulating the composition according to any one of Items 1, 3 to 5, and 7 as a working fluid in a refrigerating machine.

### Advantageous Effects of Invention

According to the present disclosure, disproportionation can be suppressed in a refrigerant comprising HFO-1132(E) when the refrigerant has a pressure of 3.0 MPa or less and a temperature of 150°C or less.

### Brief Description of Drawings

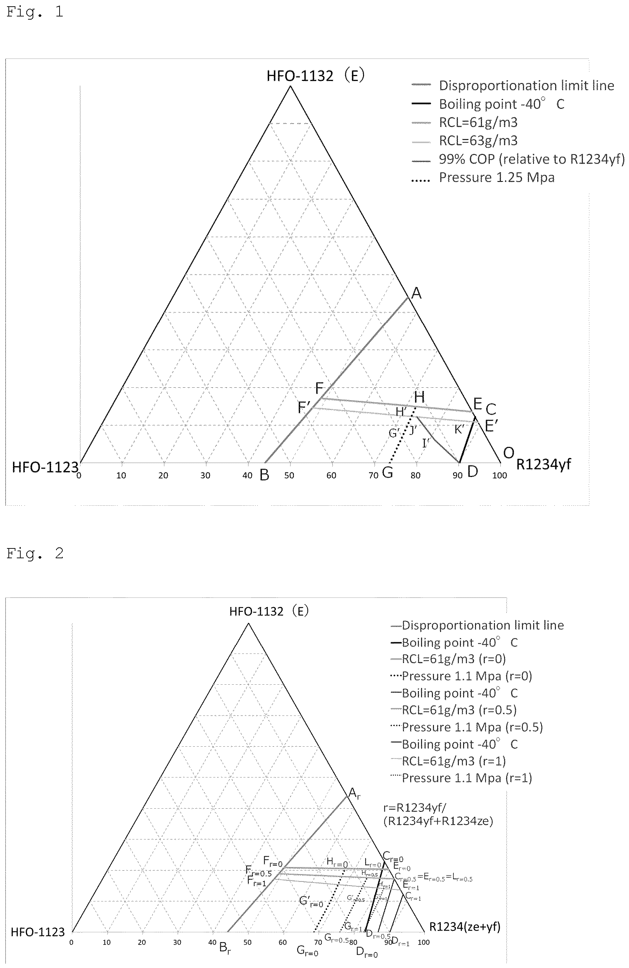

Fig. 1 is a ternary diagram showing the formulation of the composition of the present disclosure.
Fig. 2 is a ternary diagram showing the formulation of the composition of the present disclosure.

### Description of Embodiments

HFO-1132(E) is chemically unstable because it has unsaturated bonds, and there may be a risk of disproportionation. The present inventors conducted intensive studies to solve the above problem, and consequently found that in a mixed refrigerant comprising HFO-1132(E), HFO-1123, and tetrafluoropropene at a specific mixing ratio, disproportionation of HFO-1132(E) is suppressed even at the highest pressure and temperature that can locally occur in a refrigeration cycle in which the mixed refrigerant has a pressure of 3.0 MPa or less and a temperature of 150°C or less.

The present disclosure has been completed as a result of further research based on this finding. The present disclosure includes the following embodiments.

### Definition of Terms

In the present specification, the term "refrigerant" includes at least compounds that are specified in ISO 817 (International Organization for Standardization), and that are given a refrigerant number (ASHRAE number) representing the type of refrigerant with "R" at the beginning; and further includes refrigerants that have properties equivalent to those of such refrigerants, even though a refrigerant number is not yet given. Refrigerants are broadly divided into fluorocarbon compounds and non-fluorocarbon compounds in terms of the structure of the compounds. Fluorocarbon compounds include chlorofluorocarbons (CFC), hydrochlorofluorocarbons (HCFC), and hydrofluorocarbons (HFC).

In the present specification, the phrase "composition comprising a refrigerant" at least includes (1) a refrigerant itself (including a mixture of refrigerants), (2) a composition that further comprises other components and that can be mixed with at least a refrigeration oil to obtain a working fluid for a refrigerating machine, and (3) a working fluid for a refrigerating machine containing a refrigeration oil. In the present specification, of these three embodiments, the composition (2) is referred to as a "refrigerant composition" so as to distinguish it from a refrigerant itself (including a mixture of refrigerants). Further, the working fluid for a refrigerating machine (3) is referred to as a "refrigeration oil-containing working fluid" so as to distinguish it from the "refrigerant composition."

In the present specification, when the term "alternative" is used in a context in which the first refrigerant is replaced with the second refrigerant, the first type of "alternative" means that equipment designed for operation using the first refrigerant can be operated using the second refrigerant under optimum conditions, optionally with changes of only a few parts (at least one of the following: refrigeration oil, gasket, packing, expansion valve, dryer, and other parts) and equipment adjustment. In other words, this type of alternative means that the same equipment is operated with an alternative refrigerant. Embodiments of this type of "alternative" include "drop-in alternative," "nearly drop-in alternative," and "retrofit," in the order in which the extent of changes and adjustment necessary for replacing the first refrigerant with the second refrigerant is smaller.

The term "alternative" also includes a second type of "alternative," which means that equipment designed for operation using the second refrigerant is operated for the same use as the existing use with the first refrigerant by using the second refrigerant. This type of alternative means that the same use is achieved with an alternative refrigerant.

In the present specification, the term "refrigerating machine" refers to machines in general that draw heat from an object or space to make its temperature lower than the temperature of ambient air, and maintain a low temperature. In other words, refrigerating machines refer to conversion machines that gain energy from the outside to do work, and that perform energy conversion, in order to transfer heat from where the temperature is lower to where the temperature is higher.

In the present specification, a refrigerant having an "RCL of x% or more" means that the refrigerant has a refrigerant concentration limit (RCL), calculated in accordance with the US ANSI/ASHRAE Standard 34-2013, of x% or more. RCL refers to a concentration limit in the air in consideration of safety factors. RCL is an index for reducing the risk of acute toxicity, suffocation, and flammability in a closed space where humans are present. RCL is determined in accordance with the ASHRAE Standard. More specifically, RCL is the lowest concentration among the acute toxicity exposure limit (ATEL), the oxygen deprivation limit (ODL), and the flammable concentration limit (FCL), which are respectively calculated in accordance with sections 7.1.1, 7.1.2, and 7.1.3 of the ASHRAE Standard.

In the present specification, the term "pressure" refers to absolute pressure unless otherwise specified.

### 1. Refrigerant

### 1.1 Refrigerant Component

The refrigerant according to the present disclosure is a mixed refrigerant comprising HFO-1132(E), trifluoroethylene (HFO-1123), and tetrafluoropropene.

In the present disclosure, tetrafluoropropene is preferably 1,3,3,3-tetrafluoropropene (R1234ze) and/or 2,3,3,3-tetrafluoropropene (R1234yf).

Because the refrigerant according to the present disclosure satisfies the following requirements, disproportionation of HFO-1132(E) is suppressed when the refrigerant has a pressure of 3.0 MPa and a temperature of 150°C.
When the mass% of HFO-1132(E), HFO-1123, and tetrafluoropropene based on their sum is respectively represented by x, y, and z, coordinates (x,y,z) in a ternary composition diagram in which the sum of HFO-1132(E), HFO-1123, and tetrafluoropropene is 100 mass% are within the range of a figure surrounded by straight lines AB, BO, and OA that connect the following 3 points:
point A (44.0, 0.0, 56.0),
point B (0.0, 56.0, 44.0), and
point O (0.0, 0.0, 100.0),
or on the above straight line AB (excluding the points A and B).

Because the refrigerant according to the present disclosure satisfies the following requirements, the refrigerant has a boiling point of -40°C or less, and disproportionation of HFO-1132(E) is further suppressed when the refrigerant has a pressure of 3.0 MPa and a temperature of 150°C.

When the mass% of HFO-1132(E), HFO-1123, and R1234yf based on their sum is respectively represented by x, y, and z, coordinates (x,y,z) in a ternary composition diagram in which the sum of HFO-1132(E), HFO-1123, and R1234yf is 100 mass% are within the range of a figure surrounded by straight lines AB, BD, DC, and CA that connect the following 4 points:
point A (44.0, 0.0, 56.0),
point B (0.0, 56.0, 44.0),
point D (0.0, 9.8, 90.2), and
point C (12.2, 0.0, 87.8),
or on the above straight lines AB and DC (excluding the points A, B, D, and C).

Because the refrigerant according to the present disclosure satisfies the following requirements, not only is disproportionation of HFO-1132(E) suppressed when the refrigerant has a pressure of 3.0 MPa and a temperature of 150°C, but also the refrigerant has a boiling point of -40°C or less, an RCL of 61 g/m³ or more, and a pressure of 1.25 MPa or less.

In the refrigerant, coordinates (x,y,z) are within the range of a figure surrounded by straight lines GG', G'H, HE, EC, CD, and DG that connect the following 6 points:
point G (0.0, 26.4, 73.6),
point G' (7.5, 19.4, 73.1),
point H (14.9, 12.7, 81.2),
point E (13.6, 0.0, 86.4),
point C (12.2, 0.0, 87.8), and
point D (0.0, 9.8, 90.2),
or on the above straight lines GG', G'H, HE, and CD (excluding the points G, E, C, and D).

Because the refrigerant according to the present disclosure satisfies the following requirements, not only is disproportionation of HFO-1132(E) suppressed when the refrigerant has a pressure of 3.0 MPa and a temperature of 150°C, but also the refrigerant has a boiling point of -40°C or less, an RCL of 63 g/m³ or more, and a pressure of 1.25 MPa or less.

In the refrigerant, coordinates (x,y,z) are within the range of a figure surrounded by straight lines GG', G'H', H'K', K'D, and DG that connect the following 5 points:
point G (0.0, 26.4, 73.6),
point G' (7.5, 19.4, 73.1),
point H' (12.3, 14.5, 73.2),
point K' (10.9, 10.4, 78.7), and
point D (0.0, 9.8, 90.2),
or on the above straight lines GG', G'H', H'K', and K'D.

Because the refrigerant according to the present disclosure satisfies the following requirements, not only is disproportionation of HFO-1132(E) suppressed when the refrigerant has a pressure of 3.0 MPa and a temperature of 150°C, but also the refrigerant has a boiling point of -40°C or less, an RCL of 63 g/m³ or more, and a COP ratio relative to R1234yf of 99% or more. A method according to Item 1, wherein in the refrigerant, coordinates (x,y,z) are within the range of a figure surrounded by straight lines DI', I'J', J'K', and K'D that connect the following 4 points:
point D (0.0, 9.8, 90.2),
point I' (6.1, 12.7, 81.2),
point J' (12.2, 13.8, 74.0), and
point K' (10.9, 10.4, 78.7),
or on the above straight lines DI', I'J', J'K', and K'D (excluding the points G and D).

Because the refrigerant according to the present disclosure satisfies the following requirements, not only is disproportionation of HFO-1132(E) suppressed when the refrigerant has a pressure of 3.0 MPa and a temperature of 150°C, but also the refrigerant has a boiling point of -40°C or less.

Tetrafluoropropene comprises 1,3,3,3-tetrafluoropropene (R1234ze) and 2,3,3,3-tetrafluoropropene (R1234yf), and when the mass% of HFO-1132(E) is x, the mass% of HFO-1123 is y, the total mass% of R1234ze and R1234yf is z, and the mass ratio of R1234yf to the sum of R1234ze and R1234yf is r, coordinates (x,y,z) in a ternary composition diagram in which the sum of HFO-1132(E), HFO-1123, R1234ze, and R1234yf is 100 mass% are within the range of a figure surrounded by straight lines AᵣBᵣ, BᵣDᵣ, DᵣCᵣ, and CᵣAᵣ that connect the following 4 points:
point Aᵣ (44.0, 0.0, 56.0),
point Bᵣ (0.0, 56.0, 44.0),
point Dᵣ (0.0, 0.6r²-7.7r+16.9, -0.6r²+7.7r+83.1), and
point Cᵣ (r²-11.5r+22.7, 0.0, -r²+11.5r+77.3),
or on the above straight lines AᵣBᵣ and DᵣCᵣ (excluding the points Aᵣ, Bᵣ, Dᵣ, and Cᵣ).

When tetrafluoropropene comprises R1234ze and R1234yf, and when the mass% of HFO-1132(E) is x, the mass% of HFO-1123 is y, the total mass% of R1234ze and R1234yf is z, and the mass ratio of R1234yf to the sum of R1234ze and R1234yf is r, because the refrigerant according to the present disclosure satisfies the following requirements, not only is disproportionation of HFO-1132(E) suppressed when the refrigerant has a pressure of 3.0 MPa and a temperature of 150°C, but also the refrigerant has a boiling point of -40°C or less, an RCL of 61 g/m³ or more, and a pressure of 1.1 MPa or less.

In the refrigerant,
if 0≤r<0.5,
coordinates (x,y,z) are within the range of a figure surrounded by straight lines LᵣDᵣ, DᵣGᵣ, GᵣG'ᵣ, G'ᵣHᵣ, and HᵣLᵣ that connect the following 5 points:
   point Lᵣ (-6.2r+20.3, -3.6r+1.8, 9.8r+77.9),
   point Dᵣ (0.0, 0.6r²-7.7r+16.9, -0.6r²+7.7r+83.1),
   point Gᵣ (0.0, 1.4r²-15.5r+31.4, -1.4r²+15.5r+68.6),
   point G'ᵣ (10.0, 1.2r²-14.8r+21.7, -1.2r²+14.8r+68.3), and
   point Hᵣ (-1.4r²-5.1r+20.5, 3.8r²-11.5r+12.3, -2.4r²+16.6r+67.2),
   or on the above straight lines LᵣDᵣ, GᵣG' ᵣ, G' ᵣHᵣ, and HᵣLᵣ (excluding the points Dᵣ and Gᵣ); or
   if 0.5≤r<1,
   coordinates (x,y,z) are within the range of a figure surrounded by straight lines CᵣDᵣ, DᵣGᵣ, GᵣG' ᵣ, G' ᵣHᵣ, and HᵣCᵣ that connect the following 5 points:
      point Cᵣ (r²-11.5r+22.7, 0.0, -r²+11.5r+77.3),
      point Dᵣ (0.0, 0.6r²-7.7r+16.9, -0.6r²+7.7r+83.1),
      point Gᵣ (0.0, 1.4r²-15.5r+31.4, -1.4r²+15.5r+68.6),
      point G'ᵣ (10.0, 1.2r²-14.8r+21.7, -1.2r²+14.8r+68.3), and
      point Hᵣ (-1.4r²-5.1r+20.5, 3.8r²-11.5r+12.3, -2.4r²+16.6r+67.2), or on the above straight lines CᵣDᵣ, GᵣG' ᵣ, G' ᵣHᵣ, and HᵣCᵣ (excluding the points Cᵣ, Dᵣ, and Gᵣ).

The refrigerant according to the present disclosure may comprise HFO-1132(E) in an amount of 10 mass% or more, 20 mass% or more, 30 mass% or more, or 40 mass% or more, based on the entire refrigerant. The refrigerant according to the present disclosure may comprise HFO-1123 in an amount of 10 mass% or more, 20 mass% or more, 30 mass% or more, 40 mass% or more, or 50 mass% or more, based on the entire refrigerant. The refrigerant according to the present disclosure may comprise tetrafluoropropene in an amount of 50 mass% or more, 60 mass% or more, 70 mass% or more, 80 mass% or more, or 90 mass% or more, based on the entire refrigerant.

The refrigerant according to the present disclosure may further comprise other additional refrigerants in addition to HFO-1132(E), HFO-1123, and tetrafluoropropene, as long as the above properties and effects are not impaired. In this respect, the refrigerant according to the present disclosure preferably comprises HFO-1132(E), HFO-1123, and tetrafluoropropene in a total amount of 99.5 mass% or more, more preferably 99.75 mass% or more, even more preferably 99.9 mass% or more, still even more preferably 99.99 mass% or more, and most preferably 99.999 mass% or more, based on the entire refrigerant. The refrigerant according to the present disclosure may essentially consist of HFO-1132(E), HFO-1123, and tetrafluoropropene, or may consist of HFO-1132(E), HFO-1123, and tetrafluoropropene. When the refrigerant according to the present disclosure essentially consists of HFO-1132(E), HFO-1123, and tetrafluoropropene, it may further contain, in addition to HFO-1132(E), HFO-1123, and tetrafluoropropene, impurities inevitably mixed in the production process of these compounds.

The above additional refrigerants are not limited, and can be selected from a wide range. The mixed refrigerant may contain a single additional refrigerant, or two or more additional refrigerants.

Examples of additional refrigerants include acetylene, HFO-1132a, HFO-1141, HFO-1123, HFC-143a, HFC-134a, Z-HFO-1132, HFO-1243zf, HFC-245cb, CFC-1113, HFC-227ea, HFC-236fa, HFC-236ea, and the like.

The total amount of additional refrigerants is preferably 0.5 mass% or less, more preferably 0.25 mass% or less, even more preferably 0.1 mass% or less, and most preferably 0.01 mass% or less, based on the entire refrigerant.

### 1.2. Use

The refrigerant according to the present disclosure can be preferably used as a working fluid in a refrigerating machine.

The composition according to the present disclosure is suitable for use as an alternative refrigerant for R410A.

### 2. Refrigerant Composition

The refrigerant composition according to the present disclosure comprises at least the refrigerant according to the present disclosure, and can be used for the same use as the refrigerant according to the present disclosure. Moreover, the refrigerant composition according to the present disclosure can be further mixed with at least a refrigeration oil to thereby obtain a working fluid for a refrigerating machine.

The refrigerant composition according to the present disclosure further comprises at least one other component in addition to the refrigerant according to the present disclosure. The refrigerant composition according to the present disclosure may comprise at least one of the following other components, if necessary. As described above, when the refrigerant composition according to the present disclosure is used as a working fluid in a refrigerating machine, it is generally used as a mixture with at least a refrigeration oil. Therefore, it is preferable that the refrigerant composition according to the present disclosure does not substantially comprise a refrigeration oil. Specifically, in the refrigerant composition according to the present disclosure, the content of the refrigeration oil based on the entire refrigerant composition is preferably 1 mass% or less, and more preferably 0.1 mass% or less.

### 2.1. Water

The refrigerant composition according to the present disclosure may contain a small amount of water. The water content of the refrigerant composition is preferably 0.1 mass% or less based on the entire refrigerant. A small amount of water contained in the refrigerant composition stabilizes double bonds in the molecules of unsaturated fluorocarbon compounds that can be present in the refrigerant, and makes it less likely that the unsaturated fluorocarbon compounds will be oxidized, thus increasing the stability of the refrigerant composition.

### 2.2. Tracer

A tracer is added to the refrigerant composition according to the present disclosure at a detectable concentration such that when the refrigerant composition has been diluted, contaminated, or undergone other changes, the tracer can trace the changes.

The refrigerant composition according to the present disclosure may comprise a single tracer, or two or more tracers.

The tracer is not limited, and can be suitably selected from commonly used tracers.

Examples of tracers include hydrofluorocarbons, hydrochlorofluorocarbons, chlorofluorocarbons, hydrochlorocarbons, fluorocarbons, deuterated hydrocarbons, deuterated hydrofluorocarbons, perfluorocarbons, fluoroethers, brominated compounds, iodinated compounds, alcohols, aldehydes, ketones, and nitrous oxide (N₂O). The tracer is particularly preferably a hydrofluorocarbon, a hydrochlorofluorocarbon, a chlorofluorocarbon, a hydrochlorocarbon, a fluorocarbon, or a fluoroether.

The following compounds are preferable as the tracer.
FC-14 (tetrafluoromethane, CF₄)
HCC-40 (chloromethane, CH₃Cl)
HFC-23 (trifluoromethane, CHF₃)
HFC-41 (fluoromethane, CH₃F)
HFC-125 (pentafluoroethane, CF₃CHF₂)
HFC-134a (1,1,1,2-tetrafluoroethane, CF₃CH₂F)
HFC-134 (1,1,2,2-tetrafluoroethane, CHF₂CHF₂)
HFC-143a (1,1,1-trifluoroethane, CF₃CH₃)
HFC-143 (1,1,2-trifluoroethane, CHF₂CH₂F)
HFC-152a (1,1-difluoroethane, CHF₂CH₃)
HFC-152 (1,2-difluoroethane, CH₂FCH₂F)
HFC-161 (fluoroethane, CH₃CH₂F)
HFC-245fa (1,1,1,3,3-pentafluoropropane, CF₃CH₂CHF₂)
HFC-236fa (1,1,1,3,3,3-hexafluoropropane, CF₃CH₂CF₃)
HFC-236ea (1,1,1,2,3,3-hexafluoropropane, CF₃CHFCHF₂)
HFC-227ea (1,1,1,2,3,3,3-heptafluoropropane, CF₃CHFCF₃)
HCFC-22 (chlorodifluoromethane, CHClF₂)
HCFC-31 (chlorofluoromethane, CH₂ClF)
CFC-1113 (chlorotrifluoroethylene, CF₂=CClF)
HFE-125 (trifluoromethyl-difluoromethyl ether, CF₃OCHF₂)
HFE-134a (trifluoromethyl-fluoromethyl ether, CF₃OCH₂F)
HFE-143a (trifluoromethyl-methyl ether, CF₃OCH₃)
HFE-227ea (trifluoromethyl-tetrafluoroethyl ether, CF₃OCHFCF₃)
HFE-236fa (trifluoromethyl-trifluoroethyl ether, CF₃OCH₂CF₃)

The refrigerant composition according to the present disclosure may contain tracers at a total concentration of about 10 parts per million by weight (ppm) or more and about 1000 ppm or less based on the entire refrigerant composition. The refrigerant composition according to the present disclosure preferably contains tracers at a total concentration of about 30 ppm or more, and more preferably about 50 ppm or more, based on the entire refrigerant composition. The refrigerant composition according to the present disclosure preferably contains tracers at a total concentration of about 500 ppm or less, and more preferably about 300 ppm or less, based on the entire refrigerant composition.

### 2.3. Ultraviolet Fluorescent Dye

The refrigerant composition according to the present disclosure may comprise a single ultraviolet fluorescent dye, or two or more ultraviolet fluorescent dyes.

The ultraviolet fluorescent dye is not limited, and can be suitably selected from commonly used ultraviolet fluorescent dyes.

Examples of ultraviolet fluorescent dyes include naphthalimide, coumarin, anthracene, phenanthrene, xanthene, thioxanthene, naphthoxanthene, fluorescein, and derivatives thereof. The ultraviolet fluorescent dye is particularly preferably either naphthalimide or coumarin, or both.

### 2.4. Stabilizer

The refrigerant composition according to the present disclosure may comprise a single stabilizer, or two or more stabilizers.

The stabilizer is not limited, and can be suitably selected from commonly used stabilizers.

Examples of stabilizers include nitro compounds, ethers, and amines.

Examples of nitro compounds include aliphatic nitro compounds, such as nitromethane and nitroethane; and aromatic nitro compounds, such as nitro benzene and nitro styrene.

Examples of ethers include 1,4-dioxane.

Examples of amines include 2,2,3,3,3-pentafluoropropylamine and diphenylamine.

Examples of stabilizers also include butylhydroxyxylene and benzotriazole.

The content of the stabilizer is not limited. Generally, the content of the stabilizer is preferably 0.01 mass% or more, and more preferably 0.05 mass% or more, based on the entire refrigerant. The content of the stabilizer is generally 5 mass% or less, and preferably 2 mass% or less, based on the entire refrigerant.

### 2.5. Polymerization Inhibitor

The refrigerant composition according to the present disclosure may comprise a single polymerization inhibitor, or two or more polymerization inhibitors.

The polymerization inhibitor is not limited, and can be suitably selected from commonly used polymerization inhibitors.

Examples of polymerization inhibitors include 4-methoxy-1-naphthol, hydroquinone, hydroquinone methyl ether, dimethyl-t-butylphenol, 2,6-di-tert-butyl-p-cresol, and benzotriazole.

The content of the polymerization inhibitor is not limited. Generally, the content of the polymerization inhibitor is preferably 0.01 mass% or more, and more preferably 0.05 mass% or more, based on the entire refrigerant. The content of the polymerization inhibitor is preferably 5 mass% or less, and more preferably mass% or less, based on the entire refrigerant.

### 3. Refrigeration Oil-Containing Working Fluid

The refrigeration oil-containing working fluid according to the present disclosure comprises at least the refrigerant or refrigerant composition according to the present disclosure and a refrigeration oil, for use as a working fluid in a refrigerating machine. Specifically, the refrigeration oil-containing working fluid according to the present disclosure is obtained by mixing a refrigeration oil used in a compressor of a refrigerating machine with the refrigerant or the refrigerant composition. The refrigeration oil-containing working fluid generally comprises 10 mass% or more and 50 mass% or less of refrigeration oil.

### 3.1. Refrigeration Oil

The composition according to the present disclosure may comprise a single refrigeration oil, or two or more refrigeration oils.

The refrigeration oil is not limited, and can be suitably selected from commonly used refrigeration oils. In this case, refrigeration oils that are superior in the action of increasing the miscibility with the mixture and the stability of the mixture, for example, are suitably selected as necessary.

The base oil of the refrigeration oil is preferably, for example, at least one member selected from the group consisting of polyalkylene glycols (PAG), polyol esters (POE), and polyvinyl ethers (PVE).

The refrigeration oil may further contain additives in addition to the base oil. The additive may be at least one member selected from the group consisting of antioxidants, extreme-pressure agents, acid scavengers, oxygen scavengers, copper deactivators, rust inhibitors, oil agents, and antifoaming agents.

A refrigeration oil with a kinematic viscosity of 5 cSt or more at 40°C is preferable from the standpoint of lubrication. A refrigeration oil with a kinematic viscosity of 400 cSt or less at 40°C is preferable from the standpoint of lubrication.

The refrigeration oil-containing working fluid according to the present disclosure may further optionally contain at least one additive. Examples of additives include compatibilizing agents described below.

### 3.2. Compatibilizing Agent

The refrigeration oil-containing working fluid according to the present disclosure may comprise a single compatibilizing agent, or two or more compatibilizing agents.

The compatibilizing agent is not limited, and can be suitably selected from commonly used compatibilizing agents.

Examples of compatibilizing agents include polyoxyalkylene glycol ethers, amides, nitriles, ketones, chlorocarbons, esters, lactones, aryl ethers, fluoroethers, and 1,1,1-trifluoroalkanes. The compatibilizing agent is particularly preferably a polyoxyalkylene glycol ether.

### 4. Method for Operating Refrigerating Machine

The method for operating a refrigerating machine according to the present disclosure is a method for operating a refrigerating machine using the refrigerant according to the present disclosure.

Specifically, the method for operating a refrigerating machine according to the present disclosure comprises the step of circulating the refrigerant according to the present disclosure in a refrigerating machine.

### 5. Method for Suppressing Disproportionation Reaction

The method for suppressing disproportionation reaction according to the present disclosure is a method for suppressing the disproportionation reaction of HFO-1132(E), comprising operating a refrigeration cycle using the refrigerant according to the present disclosure.

The method for suppressing disproportionation reaction according to the present disclosure exhibits an effect that the disproportionation reaction of HFO-1132(E) does not occur particularly when the refrigerant has a pressure of 3.0 MPa and a temperature of 150°C.

The method for suppressing disproportionation reaction according to the present disclosure makes it possible to operate a refrigeration cycle particularly in a refrigerating machine without any means for suppressing disproportionation reaction.

### 7. Use for Suppressing Disproportionation Reaction

The use according to the present disclosure is use of HFO-1123 and/or tetrafluoropropene for suppressing the disproportionation reaction of HFO-1132(E), and the disproportionation reaction is suppressed by mixing HFO-1132(E), HFO-1123, and tetrafluoropropene at a mixing ratio as in the refrigerant according to the present disclosure.

The use for suppressing disproportionation reaction according to the present disclosure exhibits an effect that the disproportionation reaction of HFO-1132(E) does not occur particularly when the refrigerant has a pressure of 3.0 MPa and a temperature of 150°C.

The embodiments are described above; however, it will be understood that various changes in forms and details can be made without departing from the spirit and scope of the claims.

### Examples

The present disclosure is described in more detail below with reference to Examples. However, the present disclosure is not limited to the Examples.

Mixed refrigerants were prepared by mixing HFO-1132(E), HFO-1123, and tetrafluoropropene at mass% based on their sum shown in Tables 1 to 3.

For each of these mixed refrigerants, the occurrence of disproportionation reaction was examined using the following test method and test conditions. Table 1 shows the results.

### Test method

The refrigerant composition to be tested was transferred into a test container and heated to 150°C, and then voltage was applied to a Pt wire inside the container to melt it, thereby applying 30 J of energy to the refrigerant composition. The occurrence of disproportionation reaction was determined based on the rapid rise in pressure and temperature inside the device.

### Test conditions

Test container: 38 cc SUS container
Test temperature: 150°C
Pressure: 3.0 MPa (absolute pressure)

### Determination criteria:

Non-explosion: The temperature or pressure after melting the Pt wire was less than two-fold, and rapid disproportionation reaction did not occur.
Explosion: The temperature or pressure after melting the Pt wire reached two-fold or more, and rapid disproportionation reaction occurred.

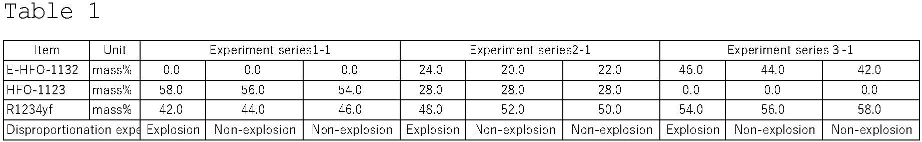

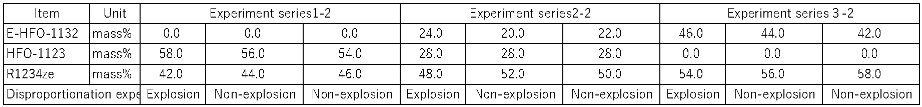

The GWP of R1234yf was evaluated based on the values stated in the Intergovernmental Panel on Climate Change (IPCC), fourth report. The GWP of HFO-1132(E), which was not stated therein, was assumed to be 1 from HFO-1132a (GWP = 1 or less) and HFO-1123 (GWP = 0.3, described in PTL 1). The refrigerating capacity of a composition comprising a mixture of HFO-1132(E), HFO-1123, and R1234yf was determined by performing theoretical refrigeration cycle calculations for the mixed refrigerants using the National Institute of Science and Technology (NIST) and Reference Fluid Thermodynamic and Transport Properties Database (Refprop 9.0) under the following conditions. The physical property values of HFO-1123 and HFO-1132(E) used in the theoretical refrigeration cycle calculations were determined by actual measurements.

The COP ratio and the refrigerating capacity ratio of the mixed refrigerants relative to those of R1234yf were determined. The calculation conditions were as follows.
Evaporating temperature: -30°C
Condensation temperature: 30°C
Degree of superheating: 5 K
Degree of subcooling: 5 K
Compressor efficiency: 70%

Table 2 shows these values together with the GWP of each mixed refrigerant.

In Table 2, the "boiling point (°C)" means a temperature at which the liquid phase of the mixed refrigerant has atmospheric pressure (101.33 kPa). In Table 2, the "motor power consumption amount (%)" refers to electrical energy used to enable an electric vehicle to run, and is expressed as a ratio with respect to a power consumption amount when the refrigerant is HFO-1234yf. In Table 2, the "heater power consumption amount (%)" refers to electrical energy used to enable an electric vehicle to drive a heater, and is expressed as a ratio with respect to a power consumption amount when the refrigerant is HFO-1234yf. In Table 2, the "drivable distance" refers to a distance drivable by an electric vehicle equipped with a rechargeable battery having a constant electric capacity while having a heater turned on, and is expressed as a ratio (%) relative to a drivable distance (100%) when the vehicle is driven without a heater turned on (i.e., heater power consumption is 0).

The coefficient of performance (COP) was determined by the following formula. COP = (refrigerating capacity or heating capacity) / power consumption

Heating was performed by using an electric heater in the case of a refrigerant having a boiling point of more than - 40°C, and using a heat pump in the case of a refrigerant having a boiling point of -40°C or less.

The power consumption amount when the heater was used was calculated according to the following equation. Power consumption amount when the heater was used = heating capacity/COP of heater

The COP of the heater refers to heating efficiency.

With regard to the heating efficiency, the COP of the heater is 1 in an electric heater, and the heater consumes an electrical power equivalent to the motor power. That is, the power consumption of the heater is E=E/(1+COP). In the case of a heat pump, the COP of the heater was determined by performing theoretical refrigeration cycle calculations for the mixed refrigerants using Refprop 10.0 of the National Institute of Science and Technology (NIST) under the following conditions.
Evaporation temperature: -30°C
Condensation temperature: 30°C
Superheating temperature: 5 K
Supercooling temperature: 5 K
Compressor efficiency: 70%

The drivable distance was calculated according to the following equation. Drivable distance = (battery capacity) / (motor power consumption amount + heater power consumption amount)

The difference between gasoline vehicles and electric vehicles, and the advantages of heat pumps, are explained.

### Difference between Gasoline Vehicles and Electric Vehicles

Gasoline vehicles reuse engine exhaust heat to provide warm air for the heating function, whereas electric vehicles do not have a heat source to be reused and thus use electrical power for heating. In conventional air conditioners using an electric heater, the use of the heater directly leads to power consumption, which significantly reduces the actual driving range. Heat pumps, which warm the interior using the temperature difference between a refrigerant and the outside air, achieve a heating effect that is higher than the power consumed, making it possible to warm the interior of a vehicle with less power than before.

### Advantages of Heat Pumps

During heating, the following steps are taken: (a) compressing refrigerant gas, which is evaporated by absorbing heat from the outside in a heat exchanger, in a compressor to form high-temperature, high-pressure gas, and (b) converting the cold air inside a vehicle into warm air by heat exchange and blowing the warm air into the vehicle from the air-conditioner vents. This corresponds to the reverse cycle to a cycle in which heat absorbed from the interior of a vehicle is released from an outdoor heat exchanger to provide a cooling and heating function in the summer. Heat pumps, which can be used for both cooling and heating with one refrigerant circuit, are characterized by a higher coefficient of performance (COP) than that of heating with conventional electric heaters.

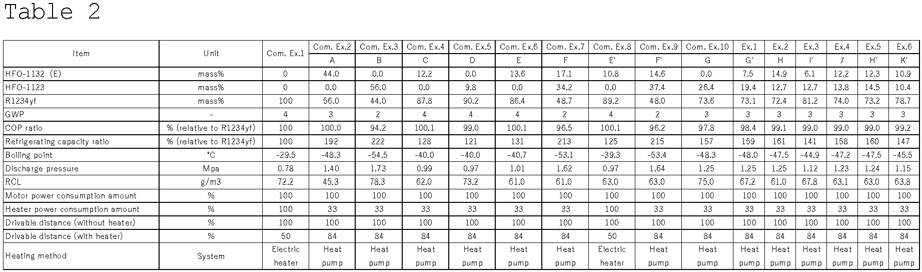

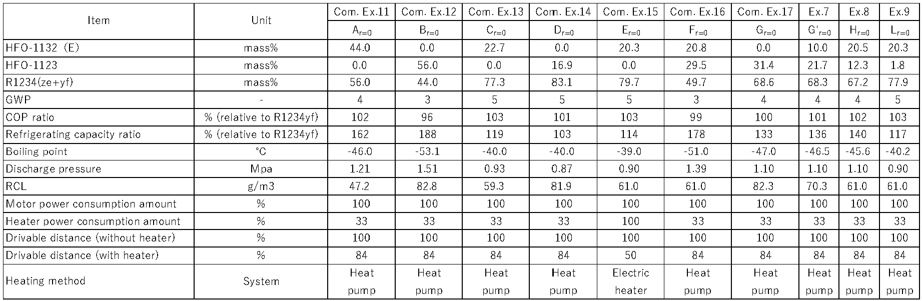

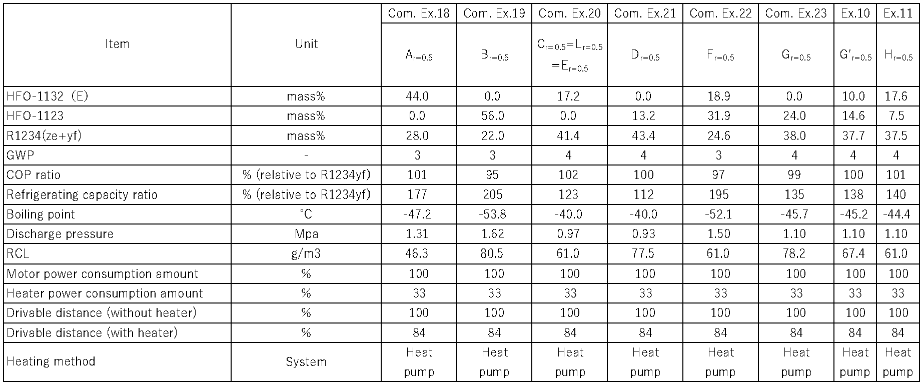

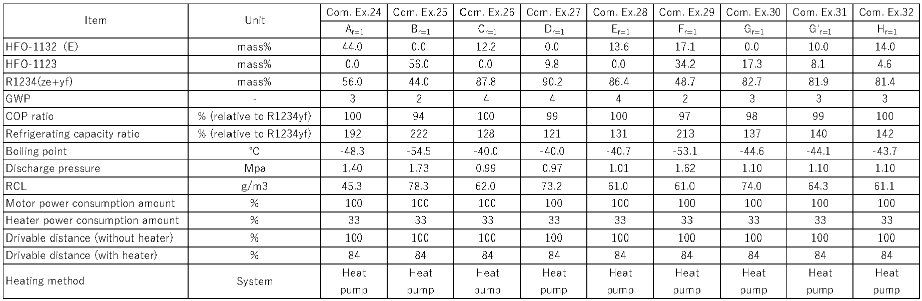

The approximate curve of each curve was determined from three points as shown below by using the least-squares method.

**Table 3**

| Item | Unit | Aᵣ₌₀ | A_{r=0.5} | Aᵣ₌₁ |
|---|---|---|---|---|
| HFO-1132 (E) | mass% | 44.0 | 44.0 | 44.0 |
| HFO-1123 | mass% | 0.0 | 0.0 | 0.0 |
| R1234(ze+yf) | mass% | 56.0 | 56.0 | 56.0 |

| Item | Unit | Bᵣ₌₀ | B_{r=0.5} | Bᵣ₌₁ |
|---|---|---|---|---|
| HFO-1132 (E) | mass% | 0.0 | 0.0 | 0.0 |
| HFO-1123 | mass% | 56.0 | 56.0 | 56.0 |
| R1234(ze+yf) | mass% | 44.0 | 44.0 | 44.0 |

| Item | Unit | Cᵣ₌₀ | C_{r=0.5} | Cᵣ₌₁ |
|---|---|---|---|---|
| HFO-1132 (E) | mass% | 22.7 | 17.2 | 12.2 |
| HFO-1123 | mass% | 0.0 | 0.0 | 0.0 |
| R1234(ze+yf) | mass% | 77.3 | 82.8 | 87.8 |
| Approximate expression of HFO-1132(E) represented by r | | r²-11.5r+22.7 | | |
| Approximate expression of HFO-1123 represented by r | | 0.0 | | |
| Approximate expression of R1234(ze+yf) represented by r | | -r²+11.5r+77.3 | | |

**Table 4**

| Item | Unit | Dᵣ₌₀ | D_{r=0.5} | Dᵣ₌₁ |
|---|---|---|---|---|
| HFO-1132 (E) | mass% | 0.0 | 0.0 | 0.0 |
| HFO-1123 | mass% | 16.9 | 13.2 | 9.8 |
| R1234(ze+yf) | mass% | 83.1 | 86.8 | 90.2 |
| Approximate expression of HFO-1132(E) represented by r | | 0.0 | | |
| Approximate expression of HFO-1123 represented by r | | 0.6r²-7.7r+16.9 | | |
| Approximate expression of R1234(ze+yf) represented by r | | -0.6r²+7.7r+83.1 | | |

| Item | Unit | Eᵣ₌₀ | C_{r=0.5}=L_{r =0.5}=Eᵣ₌₀. 5 | Eᵣ₌₁ |
|---|---|---|---|---|
| HFO-1132 (E) | mass% | 20.3 | 17.2 | 13.6 |
| HFO-1123 | mass% | 0.0 | 0.0 | 0.0 |
| R1234(ze+yf) | mass% | 79.7 | 82.8 | 86.4 |
| Approximate expression of HFO-1132(E) represented by r | | -r²-5.7r+20.3 | | |
| Approximate expression of HFO-1123 represented by r | | 0.0 | | |
| Approximate expression of R1234(ze+yf) represented by r | | r²+5.7r+79.7 | | |

| Item | Unit | Fᵣ₌₀ | F_{r=0.5} | Fᵣ₌₁ |
|---|---|---|---|---|
| HFO-1132 (E) | mass% | 20.8 | 18.9 | 17.1 |
| HFO-1123 | mass% | 29.5 | 31.9 | 34.2 |
| R1234(ze+yf) | mass% | 49.7 | 49.2 | 48.7 |
| Approximate expression of HFO-1132(E) represented by r | | 0.2r²-3.9r+20.8 | | |
| Approximate expression of HFO-1123 represented by r | | -0.2r²+4.9r+29.5 | | |
| Approximate expression of R1234(ze+yf) represented by r | | -r+49.7 | | |

**Table 5**

| Item | Unit | Gᵣ₌₀ | G_{r=0.5} | Gᵣ₌₁ |
|---|---|---|---|---|
| HFO-1132 (E) | mass% | 0.0 | 0.0 | 0.0 |
| HFO-1123 | mass% | 31.4 | 24.0 | 17.3 |
| R1234(ze+yf) | mass% | 68.6 | 76.0 | 82.7 |
| Approximate expression of HFO-1132(E) represented by r | | 0.0 | | |
| Approximate expression of HFO-1123 represented by r | | 1.4r²-15.5r+31.4 | | |
| Approximate expression of R1234(ze+yf) represented by r | | -1.4r²+15.5r+68.6 | | |

| Item | Unit | G'ᵣ₌₀ | G'_{r=0.5} | G'ᵣ₌₁ |
|---|---|---|---|---|
| HFO-1132 (E) | mass% | 10.0 | 10.0 | 10.0 |
| HFO-1123 | mass% | 21.7 | 14.6 | 8.1 |
| R1234(ze+yf) | mass% | 68.3 | 75.4 | 81.9 |
| Approximate expression of HFO-1132(E) represented by r | | 10.0 | | |
| Approximate expression of HFO-1123 represented by r | | 1.2r²-14.8r+21.7 | | |
| Approximate expression of R1234(ze+yf) represented by r | | -1.2r²+14.8r+68.3 | | |

| Item | Unit | Hᵣ₌₀ | H_{r=0.5} | Hᵣ₌₁ |
|---|---|---|---|---|
| HFO-1132 (E) | mass% | 20.5 | 17.6 | 14.0 |
| HFO-1123 | mass% | 12.3 | 7.5 | 4.6 |
| R1234(ze+yf) | mass% | 67.2 | 74.9 | 81.4 |
| Approximate expression of HFO-1132(E) represented by r | | -1.4r²-5.1r+20.5 | | |
| Approximate expression of HFO-1123 represented by r | | 3.8r²-11.5r+12.3 | | |
| Approximate expression of R1234(ze+yf) represented by r | | -2.4r²+16.6r+67.2 | | |

**Table 6**

| Item | Unit | Lᵣ₌₀ | C_{r=0.5}=L_{r =0.5}=Eᵣ₌₀. ₅ |
|---|---|---|---|
| HFO-1132 (E) | mass% | 20.3 | 17.2 |
| HFO-1123 | mass% | 1.8 | 0.0 |
| R1234(ze+yf) | mass% | 77.9 | 82.8 |
| Approximate expression of HFO-1132(E) represented by r | | -6.2r+20.3 | |
| Approximate expression of HFO-1123 represented by r | | -3.6r+1.8 | |
| Approximate expression of R1234(ze+yf) represented by r | | 9.8r+77.9 | |

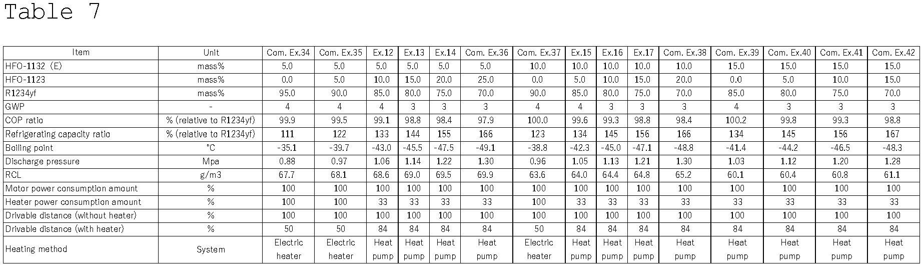

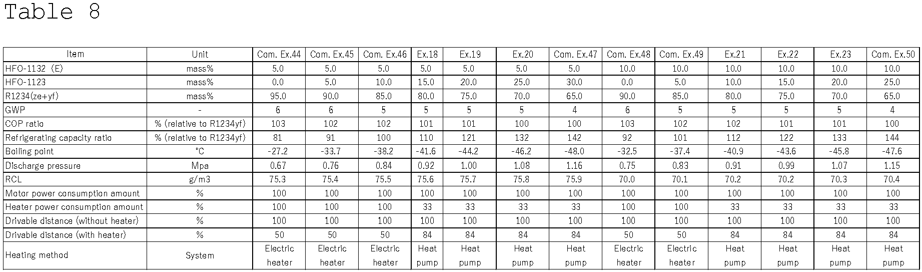

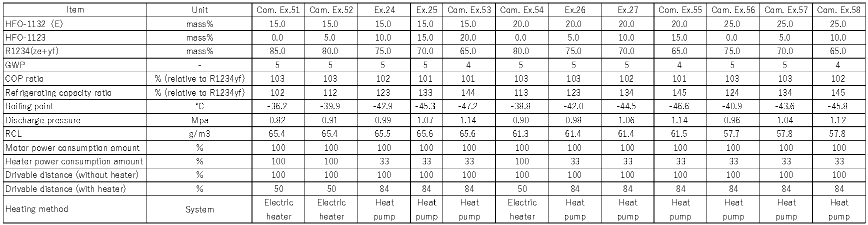

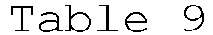

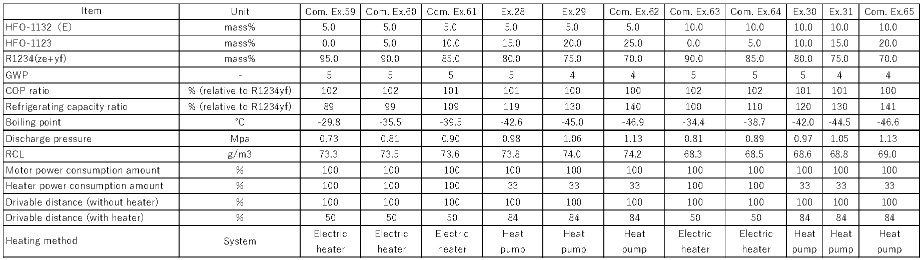

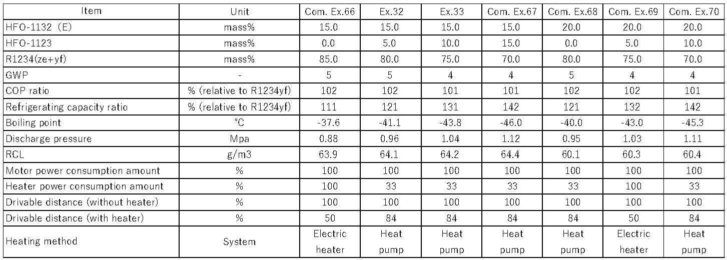

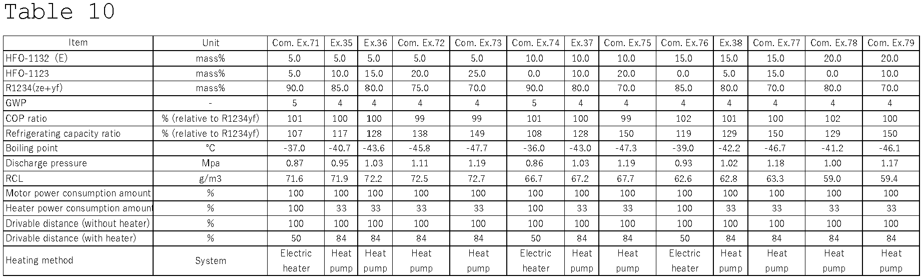

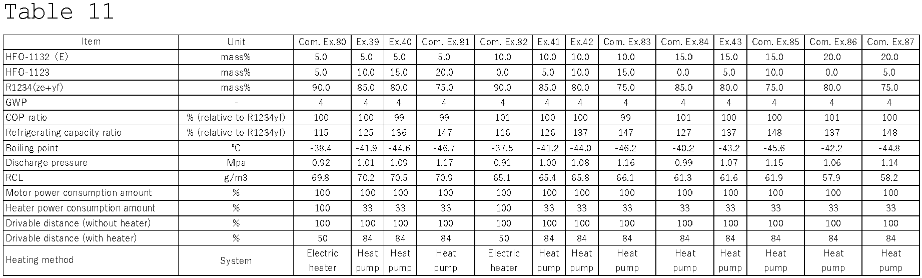

These results reveal that because the refrigerant according to the present disclosure satisfies the following requirements, disproportionation of HFO-1132(E) is suppressed when the refrigerant has a pressure of 3.0 MPa and a temperature of 150°C. When the mass% of HFO-1132(E), HFO-1123, and tetrafluoropropene based on their sum is respectively represented by x, y, and z, coordinates (x,y,z) in a ternary composition diagram in which the sum of HFO-1132(E), HFO-1123, and tetrafluoropropene is 100 mass% are within the range of a figure surrounded by straight lines AB, BO, and OA that connect the following 3 points:
point A (44.0, 0.0, 56.0),
point B (0.0, 56.0, 44.0), and
point O (0.0, 0.0, 100.0),
or on the above straight line AB (excluding the points A and B).

These results reveal that because the refrigerant according to the present disclosure satisfies the following requirements, the refrigerant has a boiling point of -40°C or less, and disproportionation of HFO-1132(E) is further suppressed when the refrigerant has a pressure of 3.0 MPa and a temperature of 150°C.

In the refrigerant, coordinates (x,y,z) are within the range of a figure surrounded by straight lines AB, BD, DC, and CA that connect the following 4 points:
point A (44.0, 0.0, 56.0),
point B (0.0, 56.0, 44.0),
point D (0.0, 9.8, 90.2), and
point C (12.2, 0.0, 87.8),
or on the above straight lines AB and DC (excluding the points A, B, D, and C).

These results reveal that because the refrigerant according to the present disclosure satisfies the following requirements, not only is disproportionation of HFO-1132(E) suppressed when the refrigerant has a pressure of 3.0 MPa, but also the refrigerant has a boiling point of -40°C or less, an RCL of 61 g/m³ or more, and a pressure of 1.25 MPa or less. In the refrigerant, coordinates (x,y,z) are within the range of a figure surrounded by straight lines GG', G'H, HE, EC, CD, and DG that connect the following 6 points:
point G (0.0, 26.4, 73.6),
point G' (7.5, 19.4, 73.1),
point H (14.9, 12.7, 81.2),
point E (13.6, 0.0, 86.4),
point C (12.2, 0.0, 87.8), and
point D (0.0, 9.8, 90.2),
or on the above straight lines GG', G'H, HE, and CD (excluding the points G, E, C, and D).

These results reveal that because the refrigerant according to the present disclosure satisfies the following requirements, not only is disproportionation of HFO-1132(E) suppressed when the refrigerant has a pressure of 3.0 MPa and a temperature of 150°C, but also the refrigerant has a boiling point of -40°C or less, an RCL of 63 g/m³ or more, and a pressure of 1.25 MPa or less. In the refrigerant, coordinates (x,y,z) are within the range of a figure surrounded by straight lines GG', G'H', H'K', K'D, and DG that connect the following 5 points: point G (0.0, 26.4, 73.6),
point G' (7.5, 19.4, 73.1),
point H' (12.3, 14.5, 73.2),
point K' (10.9, 10.4, 78.7), and
point D (0.0, 9.8, 90.2),
or on the above straight lines GG', G'H', H'K', and K'D.

These results reveal that because the refrigerant according to the present disclosure satisfies the following requirements, not only is disproportionation of HFO-1132(E) suppressed when the refrigerant has a pressure of 3.0 MPa and a temperature of 150°C, but also the refrigerant has a boiling point of -40°C or less, an RCL of 63 g/m³ or more, and a COP ratio relative to R1234yf of 99% or more. A method according to Item 1, wherein in the refrigerant, coordinates (x,y,z) are within the range of a figure surrounded by straight lines DI', I'J', J'K', and K'D that connect the following 4 points:
point D (0.0, 9.8, 90.2),
point I' (6.1, 12.7, 81.2),
point J' (12.2, 13.8, 74.0), and
point K' (10.9, 10.4, 78.7),
or on the above straight lines DI', I'J', J'K', and K'D (excluding the points G and D).

These results reveal that because the refrigerant according to the present disclosure satisfies the following requirements, the refrigerant has a boiling point of -40°C or less, and disproportionation of HFO-1132(E) is suppressed when the refrigerant has a pressure of 3.0 MPa and a temperature of 150°C. Tetrafluoropropene comprises 1,3,3,3-tetrafluoropropene (R1234ze) and 2,3,3,3-tetrafluoropropene (R1234yf), and when the mass% of HFO-1132(E) is x, the mass% of HFO-1123 is y, the total mass% of R1234ze and R1234yf is z, and the mass ratio of R1234yf to the sum of R1234ze and R1234yf is r, coordinates (x,y,z) in a ternary composition diagram in which the sum of HFO-1132(E), HFO-1123, R1234ze, and R1234yf is 100 mass% are within the range of a figure surrounded by straight lines AᵣBᵣ, BᵣDᵣ, DᵣCᵣ, and CᵣAᵣ that connect the following 4 points:
point Aᵣ (44.0, 0.0, 56.0),
point Bᵣ (0.0, 56.0, 44.0),
point Dᵣ (0.0, 0.6r²-7.7r+16.9, -0.6r²+7.7r+83.1), and point Cᵣ (r²-11.5r+22.7, 0.0, -r²+11.5r+77.3),
or on the above straight lines AᵣBᵣ and DᵣCᵣ (excluding the points Aᵣ, Bᵣ, Dᵣ, and Cᵣ).

These results reveal that when tetrafluoropropene comprises R1234ze and R1234yf, and when the mass% of HFO-1132(E) is x, the mass% of HFO-1123 is y, the total mass% of R1234ze and R1234yf is z, and the mass ratio of R1234yf to the sum of R1234ze and R1234yf is r, because the refrigerant according to the present disclosure satisfies the following requirements, not only is disproportionation of HFO-1132(E) suppressed when the refrigerant has a pressure of 3.0 MPa, but also the refrigerant has a boiling point of -40°C or less, an RCL of 61 g/m³ or more, and a pressure of 1.1 MPa or less.

In the refrigerant,
if 0≤r<0.5,
coordinates (x,y,z) are within the range of a figure surrounded by straight lines LᵣDᵣ, DᵣGᵣ, GᵣG'ᵣ, G'ᵣHᵣ, and HᵣLᵣ that connect the following 5 points:
   point Lᵣ (-6.2r+20.3, -3.6r+1.8, 9.8r+77.9),
   point Dᵣ (0.0, 0.6r²-7.7r+16.9, -0.6r²+7.7r+83.1),
   point Gᵣ (0.0, 1.4r²-15.5r+31.4, -1.4r²+15.5r+68.6),
   point G'ᵣ (10.0, 1.2r²-14.8r+21.7, -1.2r²+14.8r+68.3), and
   point Hᵣ (-1.4r²-5.1r+20.5, 3.8r²-11.5r+12.3, -2.4r²+16.6r+67.2),
   or on the above straight lines LᵣDᵣ, GᵣG'ᵣ, G'ᵣHᵣ, and HᵣLᵣ (excluding the points Dᵣ and Gᵣ); or
   if 0.5≤r<1,
   coordinates (x,y,z) are within the range of a figure surrounded by straight lines CᵣDᵣ, DᵣGᵣ, GᵣG'ᵣ, G'ᵣHᵣ, and HᵣCᵣ that connect the following 5 points:
      point Cᵣ (r²-11.5r+22.7, 0.0, -r²+11.5r+77.3),
      point Dᵣ (0.0, 0.6r²-7.7r+16.9, -0.6r²+7.7r+83.1),
      point Gᵣ (0.0, 1.4r²-15.5r+31.4, -1.4r²+15.5r+68.6),
      point G'ᵣ (10.0, 1.2r²-14.8r+21.7, -1.2r²+14.8r+68.3), and
      point Hᵣ (-1.4r²-5.1r+20.5, 3.8r²-11.5r+12.3, -2.4r²+16.6r+67.2),
      or on the above straight lines CᵣDᵣ, GᵣG' ᵣ, G' ᵣHᵣ, and HᵣCᵣ (excluding the points Cᵣ, Dᵣ, and Gᵣ).

## Claims

1. A composition comprising a refrigerant,
the refrigerant comprising trans-1,2-difluoroethylene (HFO-1132(E)), trifluoroethylene (HFO-1123), and tetrafluoropropene in a total amount of 99.5 mass% or more based on the entire refrigerant,
wherein
when the mass% of HFO-1132(E), HFO-1123, and tetrafluoropropene based on their sum is respectively represented by x, y, and z, coordinates (x,y,z) in a ternary composition diagram in which the sum of HFO-1132(E), HFO-1123, and tetrafluoropropene is 100 mass% are within the range of a figure surrounded by straight lines AB, BO, and OA that connect the following 3 points:
point A (44.0, 0.0, 56.0),
point B (0.0, 56.0, 44.0), and
point O (0.0, 0.0, 100.0),
or on the above straight line AB (excluding the points A and B).

2. A method for suppressing the disproportionation reaction of HFO-1132(E), comprising operating a refrigeration cycle using a composition comprising a refrigerant,
the refrigerant comprising HFO-1132(E), HFO-1123, and 2,3,3,3-tetrafluoropropene (R1234yf) in a total amount of 99.5 mass% or more based on the entire refrigerant,
wherein
when the mass% of HFO-1132(E), HFO-1123, and R1234yf based on their sum is respectively represented by x, y, and z, coordinates (x,y,z) in a ternary composition diagram in which the sum of HFO-1132(E), HFO-1123, and R1234yf is 100 mass% are within the range of a figure surrounded by straight lines AB, BD, DC, and CA that connect the following 4 points:
point A (44.0, 0.0, 56.0),
point B (0.0, 56.0, 44.0),
point D (0.0, 9.8, 90.2), and
point C (12.2, 0.0, 87.8),
or on the above straight lines AB and DC (excluding the points A, B, D, and C).

3. A composition comprising a refrigerant,
the refrigerant comprising HFO-1132(E), HFO-1123, and R1234yf in a total amount of 99.5 mass% or more based on the entire refrigerant,
wherein
when the mass% of HFO-1132(E), HFO-1123, and R1234yf based on their sum is respectively represented by x, y, and z, coordinates (x,y,z) in a ternary composition diagram in which the sum of HFO-1132(E), HFO-1123, and R1234yf is 100 mass% are within the range of a figure surrounded by straight lines GG', G'H, HE, EC, CD, and DG that connect the following 6 points:
point G (0.0, 26.4, 73.6),
point G' (7.5, 19.4, 73.1),
point H (14.9, 12.7, 72.4),
point E (13.6, 0.0, 86.4),
point C (12.2, 0.0, 87.8), and
point D (0.0, 9.8, 90.2),
or on the above straight lines GG', G'H, HE, and CD (excluding the points G, E, C, and D).

4. A composition comprising a refrigerant,
the refrigerant comprising HFO-1132(E), HFO-1123, and R1234yf in a total amount of 99.5 mass% or more based on the entire refrigerant,
wherein
when the mass% of HFO-1132(E), HFO-1123, and R1234yf based on their sum is respectively represented by x, y, and z, coordinates (x,y,z) in a ternary composition diagram in which the sum of HFO-1132(E), HFO-1123, and R1234yf is 100 mass% are within the range of a figure surrounded by straight lines GG', G'H', H'K', K'D, and DG that connect the following 5 points:
point G (0.0, 26.4, 73.6),
point G' (7.5, 19.4, 73.1),
point H' (12.3, 14.5, 73.2),
point K' (10.9, 10.4, 78.7), and
point D (0.0, 9.8, 90.2),
or on the above straight lines GG', G'H', H'K', and K'D (excluding the points G and D).

5. The composition according to claim 4, wherein in the refrigerant, coordinates (x,y,z) are within the range of a figure surrounded by straight lines DI', I'J', J'K', and K'D that connect the following 4 points:
point D (0.0, 9.8, 90.2),
point I' (6.1, 12.7, 81.2),
point J' (12.2, 13.8, 74.0), and
point K' (10.9, 10.4, 78.7),
or on the above straight lines DI', I'J', J'K', and K'D (excluding the points G and D).

6. A method for suppressing the disproportionation reaction of HFO-1132(E), comprising operating a refrigeration cycle using a composition comprising a refrigerant,
the refrigerant comprising HFO-1132(E), HFO-1123, and tetrafluoropropene in a total amount of 99.5 mass% or more based on the entire refrigerant,
tetrafluoropropene comprising 1,3,3,3-tetrafluoropropene (R1234ze) and R1234yf,
wherein
when the mass% of HFO-1132(E) is x, the mass% of HFO-1123 is y, the total mass% of R1234ze and R1234yf is z, and the mass ratio of R1234yf to the sum of R1234ze and R1234yf is r, coordinates (x,y,z) in a ternary composition diagram in which the sum of HFO-1132(E), HFO-1123, R1234ze, and R1234yf is 100 mass% are within the range of a figure surrounded by straight lines AᵣBᵣ, BᵣDᵣ, DᵣCᵣ, and CᵣAᵣ that connect the following 4 points:
point Aᵣ (44.0, 0.0, 56.0),
point Bᵣ (0.0, 56.0, 44.0),
point Dᵣ (0.0, 0.6r²-7.7r+16.9, -0.6r²+7.7r+83.1), and
point Cᵣ (r²-11.5r+22.7, 0.0, -r²+11.5r+77.3),
or on the above straight lines AᵣBᵣ and DᵣCᵣ (excluding the points Aᵣ, Bᵣ, Dᵣ, and Cᵣ).

7. A composition comprising a refrigerant,
the refrigerant comprising HFO-1132(E), HFO-1123, and tetrafluoropropene in a total amount of 99.5 mass% or more based on the entire refrigerant,
wherein
when the mass% of HFO-1132(E) is x, the mass% of HFO-1123 is y, the total mass% of R1234ze and R1234yf is z, and the mass ratio of R1234yf to the sum of R1234ze and R1234yf is r,
if 0≤r<0.5,
coordinates (x,y,z) in a ternary composition diagram in which the sum of HFO-1132(E), HFO-1123, R1234ze, and R1234yf is 100 mass% are within the range of a figure surrounded by straight lines LᵣDᵣ, DᵣGᵣ, GᵣG' ᵣ, G' ᵣHᵣ, and HᵣLᵣ that connect the following 5 points:
point Lᵣ (-6.2r+20.3, -3.6r+1.8, 9.8r+77.9),
point Dᵣ (0.0, 0.6r²-7.7r+16.9, -0.6r²+7.7r+83.1),
point Gᵣ (0.0, 1.4r²-15.5r+31.4, -1.4r²+15.5r+68.6),
point G'ᵣ (10.0, 1.2r²-14.8r+21.7, -1.2r²+14.8r+68.3), and
point Hᵣ (-1.4r²-5.1r+20.5, 3.8r²-11.5r+12.3, -2.4r²+16.6r+67.2),
or on the above straight lines LᵣDᵣ, GᵣG' ᵣ, G' ᵣHᵣ, and HᵣLᵣ (excluding the points Dᵣ and Gᵣ); or
if 0.5≤r<1,
coordinates (x,y,z) are within the range of a figure surrounded by straight lines CᵣDᵣ, DᵣGᵣ, GᵣG' ᵣ, G' ᵣHᵣ, and HᵣCᵣ that connect the following 5 points:
point Cᵣ (r²-11.5r+22.7, 0.0, -r²+11.5r+77.3),
point Dᵣ (0.0, 0.6r²-7.7r+16.9, -0.6r²+7.7r+83.1),
point Gᵣ (0.0, 1.4r²-15.5r+31.4, -1.4r²+15.5r+68.6),
point G'ᵣ (10.0, 1.2r²-14.8r+21.7, -1.2r²+14.8r+68.3), and
point Hᵣ (-1.4r²-5.1r+20.5, 3.8r²-11.5r+12.3, -2.4r²+16.6r+67.2),
or on the above straight lines CᵣDᵣ, GᵣG' ᵣ, G' ᵣHᵣ, and HᵣCᵣ (excluding the points Cᵣ, Dᵣ, and Gᵣ).

8. Use of the composition according to any one of claims 1, 3 to 5, and 7, for suppressing the disproportionation reaction of HFO-1132 (E) .

9. The composition according to any one of claims 1, 3 to 5, and 7, for use as a working fluid for a refrigerating machine, wherein the composition further comprises a refrigeration oil.

10. The composition according to any one of claims 1, 3 to 5, and 7, for use as an alternative refrigerant for R32 and/or R410A.

11. Use of the composition according to any one of claims 1, 3 to 5, and 7 as an alternative refrigerant for R32 and/or R410A.

12. Use of a composition comprising a refrigerant as an alternative refrigerant for R32 and/or R410A,
the refrigerant comprising HFO-1132(E), HFO-1123, and 2,3,3,3-tetrafluoropropene (R1234yf) in a total amount of 99.5 mass% or more based on the entire refrigerant,
wherein
when the mass% of HFO-1132(E), HFO-1123, and R1234yf based on their sum is respectively represented by x, y, and z, coordinates (x,y,z) in a ternary composition diagram in which the sum of HFO-1132(E), HFO-1123, and R1234yf is 100 mass% are within the range of a figure surrounded by straight lines AB, BD, DC, and CA that connect the following 4 points:
point A (44.0, 0.0, 56.0),
point B (0.0, 56.0, 44.0),
point D (0.0, 9.8, 90.2), and
point C (12.2, 0.0, 87.8),
or on the above straight lines AB and DC (excluding the points A, B, D, and C) .

13. Use of a composition comprising a refrigerant as an alternative refrigerant for R32 and/or R410A,
the refrigerant comprising HFO-1132(E), HFO-1123, and tetrafluoropropene in a total amount of 99.5 mass% or more based on the entire refrigerant,
tetrafluoropropene comprising R1234ze and R1234yf,
wherein
when the mass% of HFO-1132(E) is x, the mass% of HFO-1123 is y, the total mass% of R1234ze and R1234yf is z, and the mass ratio of R1234yf to the sum of R1234ze and R1234yf is r, coordinates (x,y,z) in a ternary composition diagram in which the sum of HFO-1132(E), HFO-1123, R1234ze, and R1234yf is 100 mass% are within the range of a figure surrounded by straight lines AᵣBᵣ, BᵣDᵣ, DᵣCᵣ, and CᵣAᵣ that connect the following 4 points:
point Aᵣ (44.0, 0.0, 56.0),
point Bᵣ (0.0, 56.0, 44.0),
point Dᵣ (0.0, 0.6r²-7.7r+16.9, -0.6r²+7.7r+83.1), and
point Cᵣ (r²-11.5r+22.7, 0.0, -r²+11.5r+77.3),
or on the above straight lines AᵣBᵣ and DᵣCᵣ (excluding the points Aᵣ, Bᵣ, Dᵣ, and Cᵣ).

14. A refrigerating machine comprising the composition according to any one of claims 1, 3 to 5, and 7 as a working fluid.

15. A method for operating a refrigerating machine, comprising circulating the composition according to any one of claims 1, 3 to 5, and 7 as a working fluid in a refrigerating machine.
